# FASCICULE DE BREVET EUROPEEN

(11) **EP 3 803 061 B1**
(45) Date de publication et mention de la délivrance du brevet: **12.03.2025**
(21) Numéro de dépôt: 19790035.0
(22) Date de dépôt: 16.05.2019
(51) Int. Cl.: F01D 11/02, B64D 29/00, F02C 7/28, F16J 15/447

(54) **ARRANGEMENT D'ÉTANCHÉITÉ ENTRE DEUX PAROIS ANNULAIRES D'UN MOTEUR D'AÉRONEF**
DICHTUNGSANORDNUNG ZWISCHEN ZWEI RINGFÖRMIGEN WANDUNGEN EINES FLUGZEUGANTRIEBS
SEALING ARRANGEMENT BETWEEN TWO ANNULAR WALLS OF AN AIRCAFT ENGINE

(30) Priorité: 28.05.2018 FR 1854491
(43) Date de publication de la demande: 14.04.2021
(73) Titulaire: SAFRAN AIRCRAFT ENGINES, 75015 Paris (FR)
(72) Inventeur: SOURYAVONGSA, Eddy, Keomorakott, 77550 MOISSY-CRAMAYEL (FR); DE GAILLARD, Thomas, Alain, 77550 MOISSY-CRAMAYEL (FR); FIXY, Teddy, 77550 MOISSY-CRAMAYEL (FR); NOTARIANNI, Gilles, Pierre-Marie, 77550 MOISSY-CRAMAYEL (FR)
(74) Mandataire: Gevers & Orès
(86) Numéro de dépôt international: PCT/FR2019/051123
(87) Numéro de publication internationale: WO 2019/229322

(56) Documents cités:
- EP-A1- 2 246 581
- US-A- 5 186 609
- US-A- 5 407 319
- US-A1- 2014 147 271

## Description

### Domaine technique :

La présente invention concerne le domaine des turbomachines pour aéronefs. Elle vise plus particulièrement les systèmes d'étanchéité entre deux parois cylindriques engagées coaxialement l'une dans l'autre.

### Etat de l'art -

Notamment, dans l'architecture de turbomachine à doublet d'hélices non carénées, il est par exemple nécessaire d'assurer l'étanchéité au passage entre le carénage extérieur, statique, et la plateforme reliée aux pales de chaque hélice. L'étanchéité doit également être assurée entre des parois reliées aux arbres entraînant ces hélices et un carter interne ou une coque qui est soit statique, soit tournant à une vitesse différente.

Une solution connue, généralement adoptée dans les turbomachines pour assurer une étanchéité entre deux éléments tournants, est l'introduction de joints à labyrinthes comme par exemple dans les documents US 5 186 609 A et EP 2 246 581 A1. Le document US5407319A présente un autre arrangement d'étanchéité selon l'état de la technique.

Cependant, pour certaines des configurations citées sur l'exemple, il peut y avoir, de façon primordiale, un déplacement radial important entre les deux parois, A cause des tolérances de fabrication et des jeux, les labyrinthes peuvent ici se retrouver avec un jeu radial très ouvert afin d'assurer le montage et un fonctionnement sain. Cela nuit à l'efficacité de leur fonction principale qui est d'assurer l'étanchéité.

L'invention a pour but de permettre d'assurer une bonne étanchéité à un passage entre deux coques concentriques pouvant tourner l'une par rapport à l'autre en tenant compte de déplacements relatifs importants dans le sens radial.

### Présentation de l'invention:

L'invention concerne un arrangement d'étanchéité entre deux parois annulaires d'un moteur d'aéronef, les deux parois, respectivement radialement interne et externe, étant engagées coaxialement l'une dans l'autre autour d'un axe commun, caractérisé en ce que :
- la paroi externe comprend une extrémité axiale à section sensiblement en forme d'un U parallèle à l'axe X dont l'ouverture est orientée axialement dans une direction,
- la paroi interne comprend une extrémité axiale à section sensiblement en forme d'un U parallèle à l'axe X dont l'ouverture est orientée axialement dans une direction opposée,
l'extrémité en U de la paroi externe comportant un bord annulaire libre engagé axialement dans l'ouverture de l'extrémité axiale de la paroi interne, et l'extrémité en U de la paroi interne comportant un bord annulaire libre engagé axialement dans l'ouverture de l'extrémité axiale de la paroi externe, de façon à ce que lesdites parois définissent entre elles un passage annulaire de gaz à section axiale sensiblement en forme de S.

La forme de S de la section axiale du passage annulaire de gaz permet d'installer des joints d'étanchéité sur au moins deux branches des trois branches du S. Ainsi, lors d'un déplacement radial important d'une paroi par rapport à l'autre, si l'une des deux branches s'ouvre, diminuant l'efficacité du joint d'étanchéité qui y est installé, l'autre branche se ferme et c'est le joint d'étanchéité installé dans cette dernière branche qui assure l'étanchéité.

Par ailleurs, Il est possible d'absorber des déplacements axiaux importants, correspondant à l'extension des branches des U des sections des extrémités des parois. En effet, cette configuration permet de créer des surfaces cylindriques coaxiales l'une en face de l'autre avec une extension axiale suffisante pour maintenir en contact des joints si ces surfaces se déplacent axialement l'une par rapport à l'autre.

Selon l'inventioin, des moyens d'étanchéité à labyrinthe, à joint brosse et/ou à joint carbone sont montés dans ledit passage.

Lesdits moyens d'étanchéité sont montés dans l'ouverture de l'extrémité axiale de la paroi interne et/ou dans l'ouverture de l'extrémité axiale de la paroi externe.

Les moyens d'étanchéité sont ainsi placés sur au moins deux branches de la section en S du passage annulaire, qui se trouvent à l'intérieur de ladite ouverture de l'une des extrémités de paroi.

Avantageusement, des moyens d'étanchéité à labyrinthe, à joint brosse et/ou à joint carbone sont montés dans ledit passage entre le bord annulaire libre de l'extrémité en U de la paroi externe et le bord annulaire libre de l'extrémité en U de la paroi interne.

De même, des moyens d'étanchéité à labyrinthe, à joint brosse et/ou à joint carbone peuvent être montés dans ledit passage entre le bord annulaire libre de l'extrémité en U de l'une des parois ou de chaque paroi et une surface en regard de l'autre paroi.

De préférence, des moyens d'étanchéité à joint brosse ou à joint carbone sont montés entre l'extrémité axiale du bord libre de l'extrémité en U de l'une des parois et l'ouverture en U de l'autre paroi.

**Selon l'invention,** dans ledit passage en S, les écarts radiaux ménagés, d'une part entre les deux bords libres des extrémités en U des parois et, d'autre part, entre le bord libre de l'extrémité en U de chaque paroi et une surface de l'autre paroi sont sensiblement égaux.

Avantageusement, l'extrémité axiale de l'une des parois est formée d'une seule pièce avec cette paroi, et l'extrémité axiale de l'autre des parois est formée par une pièce rapportée sur cette paroi.

De préférence, le bord libre de chaque extrémité en U est engagé dans une des ouvertures sur une distance axiale correspondant à environ 40 à 60% de la dimension axiale de cette ouverture.

L'invention concerne également une turbomachine d'aéronef, comportant au moins un arrangement tel que décrit précédemment.

### Brève description des figures :

La présente invention sera mieux comprise et d'autres détails, caractéristiques et avantages de la présente invention apparaîtront plus clairement à la lecture de la description qui suit, en référence aux dessins annexés sur lesquels :
La figure 1 représente une vue en perspective d'un moteur d'aéronef à deux hélices contrarotatives concerné par l'invention.
La figure 2 représente une demi coupe axiale du moteur de la figure 1 indiquant des zones utilisant un arrangement selon l'invention pour assurer l'étanchéité entre deux parois cylindriques engagées coaxialement l'une dans l'autre.
La figure 3 représente schématiquement une vue en perspective coupée selon un plan axial d'un arrangement d'étanchéité selon l'invention.
Les figures 4, 5 et 6 représentent une vue en perspective coupée selon un plan axial des positions de l'arrangement de la figure 3 pour différents déplacements radiaux entre les deux parois cylindriques.

### Description d'un mode de réalisation de l'invention :

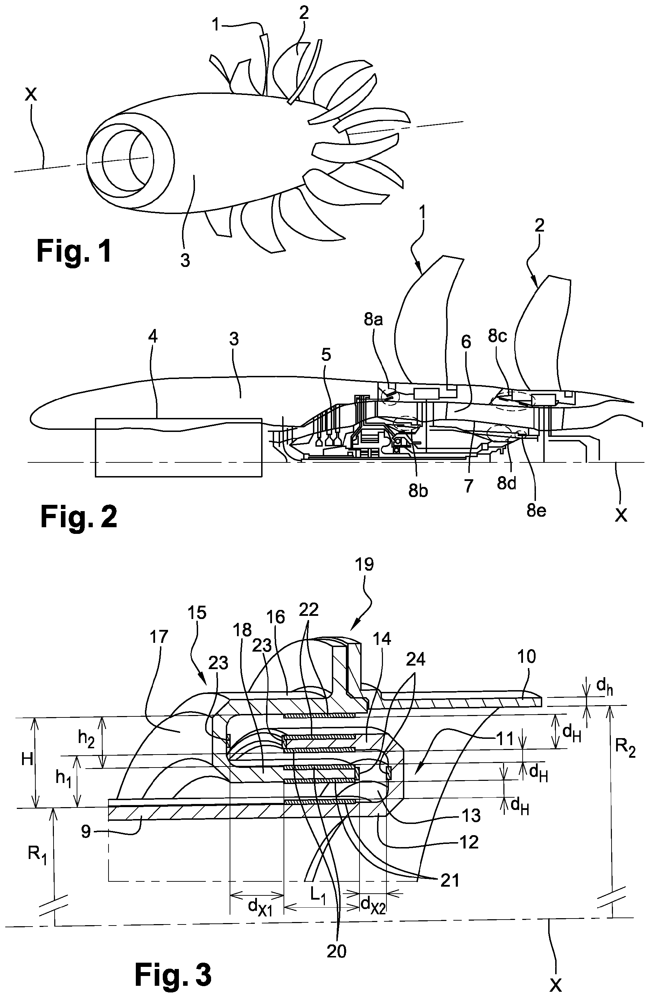

Les figures 1 et 2 présentent un moteur d'aéronef utilisant l'invention avec un doublet d'hélices contrarotatives, 1 et 2. Le doublet d'hélices est placé à l'arrière du moteur et entraîne l'air circulant autour d'un carénage 3 de révolution enveloppant le moteur. Le moteur, de type turbomachine, comporte un générateur de gaz 4, non explicité mais dont la place est indiquée par un rectangle, qui est alimenté par une entrée d'air centrale. Le générateur de gaz 4 fait tourner une turbine de puissance 5 qui entraîne en rotation autour de l'axe moteur X, via un réducteur à train d'engrenage épicycloïdal, la première hélice 1 dans un sens et la deuxième hélice 2 en sens inverse. La veine annulaire 6 d'échappement des gaz de la turbine passe entre le carénage externe 3, au niveau duquel se situent les pieds des pales des hélices, 1 et 2, et un carénage interne 7, entourant les arbres tournants des hélices. Comme indiqué sur la figure 2, on trouve donc pour chaque hélice, 1 et 2, à la traversée de chaque carter, au moins une jointure, 8a, 8b, 8c, 8d, et 8e, entre deux parois sensiblement cylindriques qui sont en rotation l'une par rapport à l'autre et pour lesquelles il faut assurer une étanchéité. En effet, de part et d'autre des parois, au niveau de la jointure, les gaz ont des propriétés dynamiques et des pressions différentes. Par ailleurs, si l'on prend par exemple la jointure 8a de la paroi tournante reliée au pied de la première hélice 1 avec un élément de carénage externe 3, fixe, entourant la veine d'échappement 6 en sortie de turbine 5, les dilatations thermiques des deux pièces peuvent être très différentes puisque l'une est en contact avec l'air ambiant extérieur et l'autre avec l'air chaud sortant de la turbine.

La figure 3 décrit un mode de réalisation d'un arrangement d'étanchéité selon l'invention entre deux parois annulaires, 9 et 10, emboîtées l'une dans l'autre suivant leur axe commun X, au niveau d'une jonction telle que celles décrites précédemment.

La paroi interne 9, venant de la gauche sur la figure, comporte une extrémité axiale 11 formant un retour radialement extérieur, dont le profil axial a sensiblement le profil d'un U parallèle à l'axe et ouvert sur la gauche. L'extrémité axiale 11 comporte ainsi un premier tronçon 12 formé par un élément de la paroi interne 9 dont la surface externe cylindrique de rayon R1 est dans le prolongement de la paroi 9 sur la gauche. Un culot 13 sensiblement radial et un bord libre cylindrique 14 dont la surface interne est à une distance radiale h1 de la surface externe de la paroi interne.

A l'inverse, la paroi externe 10, venant de la droite sur la figure, comporte une extrémité axiale 15 formant un retour radialement intérieur dont le profil axial a sensiblement le profil d'un U parallèle à l'axe et ouvert sur la droite. Ce deuxième U comporte ainsi un premier tronçon 16 formé par un élément de paroi externe 10 dont la surface interne cylindrique de rayon R2 est dans le prolongement de la paroi sur la droite. Un culot 17 sensiblement radial et un bord libre cylindrique 18 dont la surface cylindrique externe est à une distance radiale h2 de la surface interne de la paroi externe.

Comme indiqué sur la figure 1, les extrémités axiales, 11 et 15, des deux parois, 9 et 10, s'imbriquent l'une dans l'autre avec un recouvrement radial du bord libre 18 de l'extrémité radiale 15 de la paroi externe 10 par le bord libre 14 de l'extrémité axiale 11 de la paroi interne 9.

On notera ici que l'extrémité axiale 15 de la paroi externe 10 est formée par une pièce rapportée, montée sur le corps cylindrique principal de la paroi externe par une bride 19. Cela s'explique par des considérations de montage. Ainsi on peut d'abord installer la pièce rapportée avec son imbrication dans l'extrémité axiale 11 de la paroi interne 9, puis on peut amener par la droite le corps principal de la paroi externe 10 et le fixer à son extrémité axiale par la bride 19. La pièce rapportée permet également une accessibilité accrue en cas de nécessité de réparation/entretien des arrangements d'étanchéité. Cependant la présence d'une bride 19 est une option dépendant de la configuration des pièces, qui peuvent être soit des rotors soit des stators, auxquelles sont rapportées les parois interne et externe.

Ici, l'écart radial entre le bord libre 18 de l'extrémité axiale 15 de la paroi externe 10 et le bord libre 14 de l'extrémité axiale 11 de la paroi interne 9, l'écart radial entre le bord libre 14 de l'extrémité axiale 11 de la paroi interne 9 et la paroi externe 10, ainsi que l'écart radial entre le bord libre 18 de l'extrémité axiale 15 de la paroi externe 10 et la paroi interne 9, ont tous sensiblement la même valeur dH. Par ailleurs, les deux bords libres, 18 et 14, se chevauchent axialement sur une distance L1, significativement supérieure à l'épaisseur des parois, 9 et 10.

De plus, un écart axial dx1 est ménagé entre le bord libre 14 de l'extrémité axiale 11 de la paroi interne 9 et le culot 17 de l'extrémité axiale 15 de la paroi externe 10. De même, un écart axial dx2 est ménagé entre le bord libre 18 de l'extrémité axiale 15 de la paroi externe 10 et le culot 13 de l'extrémité axiale 11 de la paroi interne 9.

De la sorte, un espace annulaire libre dont la section radiale a sensiblement la forme d'un S est ménagé entre les extrémités axiales, 11 et 15, des deux parois, 9 et 10. Cet espace annulaire libre permet aux deux parois, 9 et 10, de tourner librement l'une par rapport à l'autre autour de l'axe X. D'autre part, cet espace annulaire libre relie une cavité extérieure par son ouverture axiale gauche, entre la paroi interne 9 et le bord libre 18 de l'extrémité axiale 15 de la paroi externe 10, et une cavité intérieure par son ouverture axiale droite, entre la paroi externe 10 et le bord libre 14 de l'extrémité axiale 11 de la paroi interne 9.

L'arrangement comporte un premier joint d'étanchéité 20 installé entre les faces en vis-à-vis du bord libre 14 de l'extrémité axiale 11 de la paroi interne 9 et le bord libre 18 de l'extrémité axiale 15 de la paroi externe 10. Les éléments de ce premier joint 20 s'étendent sensiblement sur toute l'extension axiale L1 du recouvrement des deux bords libres, 18 et 14.

Plusieurs options sont disponibles pour réaliser ce premier joint d'étanchéité 20. Une première option utilise une architecture mettant des léchettes de labyrinthe sur les faces avec un matériau abradable sur la partie de la surface opposée en regard des léchettes. Une deuxième option est l'utilisation d'un joint brosse. Une troisième option consiste à monter un joint carbone plaqué sur une piste d'étanchéité par un système à ressorts. Le choix de ces différentes options, connues de l'homme du métier, dépend de la nature des deux cavités à séparer. Les deux peuvent contenir de l'air ou l'une peut contenir de l'huile et l'autre de l'air, par exemple.

L'arrangement comporte aussi un deuxième joint d'étanchéité 21 qui est installé entre les faces en vis-à-vis du bord libre 18 de l'extrémité axiale 15 de la paroi externe 10 et le tronçon 12 de la paroi interne 9 dans l'extrémité axiale 11. Ce deuxième joint d'étanchéité 21 a une extension axiale sensiblement égale à celle L1 du premier joint 20. Les mêmes options sont disponibles pour réaliser ce deuxième joint d'étanchéité 21 que pour le premier joint.

Dans une variante de réalisation, un troisième joint d'étanchéité 22 est installé entre les faces en vis-à-vis du bord libre 14 de l'extrémité axiale 11 de la paroi interne 9 et le tronçon 12 de la paroi externe 10 dans l'extrémité axiale 15. Ce troisième joint d'étanchéité 22 a une extension axiale sensiblement égale à celle L1 du premier joint 20. Les mêmes options sont disponibles pour réaliser ce troisième joint d'étanchéité 22 que pour les précédents joints.

Dans une autre variante de réalisation, seuls les premier 20 et troisième 22 joints d'étanchéité sont installés.

Avantageusement, l'arrangement d'étanchéité comprend aussi un quatrième joint d'étanchéité 23, entre le culot 17 de l'extrémité axiale 15 de la paroi externe 10 et l'extrémité du bord libre 14 de l'extrémité axiale 11 de la paroi interne 9, ainsi qu'un cinquième joint d'étanchéité 24, entre le culot 13 de l'extrémité axiale 11 de la paroi interne 9 et l'extrémité du bord libre 18 de l'extrémité axiale 15 de la paroi externe 10.

Pour réaliser ces joints, 23 et 24, on peut prendre l'option d'utiliser un joint brosse. On peut également prendre l'option de monter un joint carbone plaqué sur une piste d'étanchéité par un système à ressorts. Ces options sont à privilégier par rapport à un labyrinthe car, ici, la surface de joint est faible, limitée à l'épaisseur de la paroi en extrémité du bord libre, 14 ou 18. Comme précédemment, le choix de ces différentes options, connues de l'homme du métier, dépend de la nature des deux cavités à séparer.

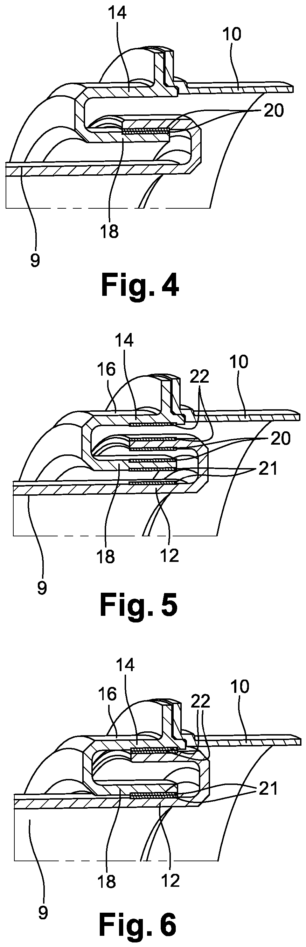

L'architecture imbriquée de l'arrangement permet dans le cas de forts déplacements radiaux d'optimiser le débit de fuite sur une alternance entre la mise en action du premier joint ou du deuxième joint. Les figures 4, 5 et 6 illustrent cette propriété en montrant le fonctionnement de l'arrangement pour différentes variations de l'écart radial entre les deux parois. Dans le cadre de l'exemple, la consommation du jeu est majoritairement liée au déplacement de la paroi interne 9.

En référence à la figure 4, dans une configuration à froid, où le rayon R1 de la paroi interne 9 est le plus faible, le bord libre 14 de l'extrémité axiale 11 de la paroi interne 9 se rapproche radialement du bord libre 18 de l'extrémité axiale 15 de la paroi externe 10. Les éléments du deuxième joint 21 ou du troisième joint 22, suivant la variante utilisée, peuvent être trop ouverts. Par contre, le premier joint 20 assure l'étanchéité car ces éléments sont rapprochés. Ce premier joint axial d'étanchéité 20 est dit optimum à « froid ».

En référence à la figure 5, dans une configuration standard, correspondant à la présentation faite sur la figure 3, les jeux radiaux successifs entre les différents tronçons imbriqués des extrémités axiales, 11 et 15, des deux parois, 9 et 10, sont sensiblement égaux. Dans la première variante du mode de réalisation, le premier joint axial d'étanchéité 20 et le deuxième joint axial d'étanchéité 21 sont actifs. Dans une autre variante, le troisième joint axial d'étanchéité 22 est également actif. Les écarts radiaux entre les tronçons font que les différents joints axiaux d'étanchéité ne sont pas sur leur optimum d'efficacité cependant l'aspect imbriqué permet de combiner l'effet de chaque joint en série ce qui compense la désadaptation.

En référence à la figure 6, dans une configuration à chaud, le rayon R1 de la paroi interne 9 ayant augmenté, cela entraîne un jeu faible entre le bord libre18 de l'extrémité axiale 15 de la paroi externe 19 et le tronçon 12 de la paroi interne 9 dans l'extrémité axiale 11. Il en est de même pour le jeu entre le bord libre 14 de l'extrémité axiale 11 de la paroi interne 9 et le tronçon 16 de la paroi externe 10 dans l'extrémité axiale 15. Le premier joint axial d'étanchéité 20 n'est pas opérationnel car ses surfaces sont trop écartées, par contre avec un jeu faible entre ses surfaces, le deuxième joint axial d'étanchéité 21 assure l'étanchéité. Il est dit optimum à « chaud ». Dans les variantes où il existe, le troisième joint axial 22 assure également dans ce cas une étanchéité de manière optimale

Dans les variantes de réalisation où ils existent, les joints radiaux, 23 et 24, entre le culot, 13 ou 17, d'une extrémité axiale, 11 ou 15, et le bord libre, 18 ou 14, de l'autre extrémité axiale, apportent une étanchéité supplémentaire qui vient s'ajouter en série à celle des joints axiaux, 20 ou 21, dans le passage annulaire en S de l'arrangement.

Sur les figures 4 à 6, les deux parois, 9 et 10, sont dans une position axiale moyenne l'une par rapport à l'autre. Un jeu axial relativement important est laissé entre les culots, 13 ou 17, et les bords libres, 18 ou 14, d'extrémité axiale afin de permettre des translations axiales relatives sans contact. Le fonctionnement des joints radiaux, 23 et 24, n'est donc pas forcément optimum mais il s'ajoute à celui des joints axiaux, 20 ou 21.

Si les deux parois annulaires, 9 et 10, s'écartent axialement, alors les culots, 13 et 17, se rapprochent du bord libre, 18 et 14, de l'autre extrémité et les joints, 23 et 24, peuvent apporter une étanchéité supplémentaire forte. Dans le cas contraire, l'efficacité des joints radiaux, 23 et 24, diminue mais, comme indiqué à propos des figures 4 à 6, l'étanchéité est assurée de toutes manières par les joints axiaux, 20 et 21.

## Revendications

1. Arrangement d'étanchéité entre deux parois annulaires (9, 10) d'un moteur d'aéronef, les deux parois, respectivement radialement interne (9) et externe (10), étant engagées coaxialement l'une dans l'autre autour d'un axe (X) commun, et dans lequel :
- la paroi externe (10) comprend une extrémité axiale (15) à section sensiblement en forme d'un U parallèle à l'axe X dont l'ouverture est orientée axialement dans une direction,
- la paroi interne (9) comprend une extrémité axiale (11) à section sensiblement en forme d'un U parallèle à l'axe X dont l'ouverture est orientée axialement dans une direction opposée,
l'extrémité (15) en U de la paroi externe (10) comportant un bord annulaire libre (18) engagé axialement dans l'ouverture de l'extrémité axiale (11) de la paroi interne (9), et l'extrémité (11) en U de la paroi interne (9) comportant un bord annulaire libre (14) engagé axialement dans l'ouverture de l'extrémité axiale (15) de la paroi externe (10), de façon à ce que lesdites parois définissent entre elles un passage annulaire de gaz à section axiale sensiblement en forme de S,
**caractérisé en ce que** des moyens (20) d'étanchéité à labyrinthe, à joint brosse et/ou à joint carbone sont montés dans ledit passage, et **en ce que**
dans ledit passage en S, les écarts radiaux (dH) ménagés, d'une part entre les deux bords libres (14, 18) des extrémités (11, 15) en U des parois (9, 10) et, d'autre part, entre le bord libre (14, 18) de l'extrémité (11, 15) en U de chaque paroi et une surface (12, 16) de l'autre paroi sont sensiblement égaux.

2. Arrangement d'étanchéité selon la revendication 1, **caractérisé en ce que** lesdits moyens d'étanchéité sont montés dans l'ouverture de l'extrémité axiale de la paroi interne et/ou dans l'ouverture de l'extrémité axiale de la paroi externe.

3. Arrangement d'étanchéité selon la revendication 1 ou 2, **caractérisé en ce que** des moyens (20) d'étanchéité à labyrinthe, à joint brosse et/ou à joint carbone sont montés dans ledit passage entre le bord annulaire libre (18) de l'extrémité (15) en U de la paroi externe (10) et le bord annulaire libre (14) de l'extrémité (11) en U de la paroi interne (9).

4. Arrangement d'étanchéité selon l'une des revendications 1 à 3, **caractérisé en ce que** des moyens (21, 22) d'étanchéité à labyrinthe, à joint brosse et/ou à joint carbone sont montés dans ledit passage entre le bord annulaire libre (14, 18) de l'extrémité (11, 15) en U de l'une des parois (9, 10) ou de chaque paroi et une surface en regard de l'autre paroi.

5. Arrangement d'étanchéité selon l'une des revendications 1 à 4, **caractérisé en ce que** des moyens (23, 24) d'étanchéité à joint brosse ou à joint carbone sont montés entre l'extrémité axiale du bord libre (14, 14) de l'extrémité (11, 15) en U de l'une des parois (9, 10) et l'ouverture en U de l'autre paroi.

6. Arrangement d'étanchéité selon l'une des revendications précédentes, **caractérisé en ce que** l'extrémité axiale (11) de l'une (9) des parois est formée d'une seule pièce avec cette paroi, et l'extrémité axiale (15) de l'autre (10) des parois est formée par une pièce rapportée sur cette paroi.

7. Arrangement d'étanchéité selon l'une des revendications précédentes, **caractérisé en ce que** le bord libre (14, 18) de chaque extrémité (11, 15) en U est engagé dans une des ouvertures sur une distance axiale (L1) correspondant à environ 40 à 60% de la dimension axiale de cette ouverture.

8. Turbomachine d'aéronef, comportant au moins un arrangement selon l'une des revendications précédentes.

## Patentansprüche

1. Dichtungsanordnung zwischen zwei ringförmigen Wänden (9, 10) eines Luftfahrzeugmotors, wobei die zwei Wände, die jeweils radial intern (9) und extern (10) vorliegen, um eine gemeinsame Achse (X) herum koaxial miteinander in Eingriff stehen, und wobei:
- die externe Wand (10) ein axiales Ende (15) mit im Wesentlichen U-förmigem Querschnitt parallel zu der Achse X umfasst, von dem die Öffnung in einer Richtung axial orientiert ist,
- die interne Wand (9) ein axiales Ende (11) mit im Wesentlichen U-förmigem Querschnitt parallel zu der Achse X umfasst, von dem die Öffnung in einer entgegengesetzten Richtung axial orientiert ist,
wobei das Ende (15) in U-Form der externen Wand (10) einen ringförmigen freien Rand (18) umfasst, der in der Öffnung des axialen Endes (11) der internen Wand (9) axial in Eingriff steht, und das Ende (11) in U-Form der internen Wand (9) einen ringförmigen freien Rand (14) umfasst, der in der Öffnung des axialen Endes (15) der externen Wand (10) axial in Eingriff steht, derart, dass die Wände untereinander einen ringförmigen Gasdurchgang mit im Wesentlichen S-förmigem axialen Querschnitt definieren,
**dadurch gekennzeichnet, dass** in dem Durchgang Mittel (20) zur Labyrinth-, Bürsten- oder Kohlenstoffdichtung montiert sind, und dadurch, dass
in dem Durchgang in S-Form die radialen Abstände (dH), die einerseits zwischen den zwei freien Rändern (14, 18) der Enden (11, 15) in U-Form der Wände (9, 10) und andererseits zwischen dem freien Rand (14, 18) des Endes (11, 15) in U-Form jeder Wand und einer Oberfläche (12, 16) der anderen Wand gebildet werden, im Wesentlichen gleich sind.

2. Dichtungsanordnung nach Anspruch 1, **dadurch gekennzeichnet, dass** die Dichtungsmittel in der Öffnung des axialen Endes der internen Wand und/oder in der Öffnung des axialen Endes der externen Wand montiert sind.

3. Dichtungsanordnung nach Anspruch 1 oder 2, **dadurch gekennzeichnet, dass** Mittel (20) zur Labyrinth-, Bürsten- oder Kohlenstoffdichtung in dem Durchgang zwischen dem ringförmigen freien Rand (18) des Endes (15) in U-Form der externen Wand (10) und dem ringförmigen freien Rand (14) des Endes (11) in U-Form der internen Wand (9) montiert sind.

4. Dichtungsanordnung nach einem der Ansprüche 1 bis 3, **dadurch gekennzeichnet, dass** Mittel (21, 22) zur Labyrinth-, Bürsten- oder Kohlenstoffdichtung in dem Durchgang zwischen dem ringförmigen freien Rand (14, 18) des Endes (11, 15) in U-Form von einer der Wände (9, 10) oder jeder Wand und einer der anderen Wand gegenüberliegenden Oberfläche montiert sind.

5. Dichtungsanordnung nach einem der Ansprüche 1 bis 4, **dadurch gekennzeichnet, dass** Mittel (23, 24) zur Bürsten- oder Kohlenstoffdichtung zwischen dem axialen Ende des freien Rands (14, 14) des Endes (11, 15) in U-Form von einer der Wände (9, 10) und der Öffnung in U-Form der anderen Wand montiert sind.

6. Dichtungsanordnung nach einem der vorstehenden Ansprüche, **dadurch gekennzeichnet, dass** das axiale Ende (11) von einer (9) der Wände aus einem einzelnen Stück mit dieser Wand ausgebildet ist, und das axiale Ende (15) der anderen (10) der Wände aus einem an dieser Wand angebrachten Stück ausgebildet ist.

7. Dichtungsanordnung nach einem der vorstehenden Ansprüche, **dadurch gekennzeichnet, dass** der freie Rand (14, 18) von jedem Ende (11, 15) in U-Form in einer der Öffnungen bei einem axialen Abstand (L1), der ungefähr 40 bis 60 % der axialen Abmessung dieser Öffnung entspricht, in Eingriff steht.

8. Turbotriebwerk eines Luftfahrzeugs, das mindestens eine Anordnung nach einem der vorstehenden Ansprüche umfasst.

## Claims

1. A sealing arrangement between two annular walls (9, 10) of an aircraft engine, the two walls, respectively the radially inner (9) and outer (10) walls, being coaxially engaged one inside the other around a common axis (X), **characterized in that** :
- the outer wall (10) comprises an axial end (15) with a cross-section that has substantially the shape of a U parallel to the axis X, the opening of which is oriented axially in one direction,
- the inner wall (9) comprises an axial end (11) with a cross-section that has substantially the shape of a U parallel to the axis X, the opening of which is oriented axially in an opposite direction,
the U-shaped end (15) of the outer wall (10) comprising a free annular edge (18) engaged axially in the opening of the axial end (11) of the inner wall (9), and the U-shaped end (11) of the inner wall (9) comprising a free annular edge (14) engaged axially in the opening of the axial end (15) of the outer wall (10), so that said walls define between them an annular gas passage with a substantially S-shaped axial section,
**characterized in that** that labyrinth, brush seal and/or carbon seal sealing means (20) are mounted in said passage, and **in that**
in the said S-shaped passage, the radial gaps (dH) provided, on the one hand, between the two free edges (14, 18) of the U-shaped ends (11, 15) of the walls (9, 10) and, on the other hand, between the free edge (14, 18) of the U-shaped end (11, 15) of each wall and a surface (12, 16) of the other wall are substantially equal.

2. The sealing arrangement according to claim 1, **characterized in that** said sealing means are mounted in the opening of the axial end of the inner wall and/or in the opening of the axial end of the outer wall.

3. The sealing arrangement according to claim 1 or 2, **characterized in that** labyrinth, brush seal and/or carbon seal sealing means (20) are mounted in said passage between the free annular edge (18) of the U-shaped end (15) of the outer wall (10) and the free annular edge (14) of the U-shaped end (11) of the inner wall (9).

4. The sealing arrangement according to one of claims 1 to 3, **characterized in that** labyrinth, brush seal and/or carbon seal sealing means (21, 22) are mounted in said passage between the free annular edge (14, 18) of the U-shaped end (11, 15) of one of the walls (9, 10) or of each wall and a surface facing the other wall.

5. The sealing arrangement according to one of claims 1 to 4, **characterized in that** brush seal or carbon seal sealing means (23, 24) are mounted between the axial end of the free edge (14, 14) of the U-shaped end (11, 15) of one of the walls (9, 10) and the U-shaped opening of the other wall.

6. The sealing arrangement according to one of the preceding claims, **characterized in that** the axial end (11) of one (9) of the walls is formed in one piece with this wall, and the axial end (15) of the other (10) of the walls is formed by an insert on this wall.

7. The sealing arrangement according to one of the preceding claims, **characterized in that** the free edge (14, 18) of each U-shaped end (11, 15) is engaged in one of the openings over an axial distance (L1) corresponding to approximately 40 to 60% of the axial dimension of this opening.

8. An aircraft turbomachine comprising at least one arrangement according to one of the preceding claims.
